# EUROPÄISCHE PATENTSCHRIFT

(11) **EP 2 936 708 B1**
(45) Veröffentlichungstag und Bekanntmachung des Hinweises auf die Patenterteilung: **12.09.2018**
(21) Anmeldenummer: 13702436.0
(22) Anmeldetag: 30.01.2013
(51) Int. Cl.: H04B 10/80, H03K 17/795

(54) **VORRICHTUNG ZUR ÜBERTRAGUNG VON SIGNALEN**
DEVICE FOR TRANSMITTING SIGNALS
DISPOSITIF DE TRANSMISSION DE SIGNAUX

(43) Veröffentlichungstag der Anmeldung: 28.10.2015
(73) Patentinhaber: Siemens Aktiengesellschaft, 80333 München (DE)
(72) Erfinder: BILLMANN, Markus, 91448 Emskirchen (DE); ERMISCH, Ronny, 90768 Fürth (DE); SCHUSTER, Dominik, 91456 Diespeck (DE); WAHLE, Marcus, 90766 Fürth (DE); SAWADSKI, Eugen, 90513 Zirndorg (DE); DOMES, Konrad, 09112 Chemnitz (DE); SCHAUER, Angelika, 91448 Emskirchen (DE); TCHOBANOV, Dimitar, 90443 Nürnberg (DE)
(86) Internationale Anmeldenummer: PCT/EP2013/051789
(87) Internationale Veröffentlichungsnummer: WO 2014/117831

(56) Entgegenhaltungen:
- DE-A1- 3 617 057
- DE-A1-102006 062 599
- US-A1- 2002 079 945
- US-A1- 2008 187 013

## Beschreibung

Die Erfindung betrifft eine Vorrichtung zur Übertragung von Signalen mit einem ersten Bauteil, an dem ein optischer Sender angeordnet ist, und einem zweiten Bauteil, an dem ein optischer Empfänger angeordnet ist.

Eine solche Vorrichtung ist beispielsweise auf dem Gebiet der Leistungselektronik bekannt. Hier kommen Umrichter zum Einsatz, die üblicherweise mit einer zentralen Regelungseinheit ausgerüstet sind. Die zentrale Regelungseinheit kommuniziert mit dezentralen, im Umrichter verteilt angeordneten Komponenten. Zur Übertragung der digitalen und analogen Signale werden in der Regel Vorrichtungen verwendet, in denen Lichtwellenleiter zur Verbindung von optischen Sendern und Empfängern dienen, die sich zwischen unterschiedlich hohen elektrischen Potenzialen erstrecken. Dabei stellen die elektrisch nicht leitenden Lichtwellenleiter eine Isolation zwischen den Bauteilen bereit. Solche Lichtwellenleiter sind jedoch kostenintensiv und aufgrund begrenzter Biegeradien und der Baulänge der Stecker raumgreifend. Darüber hinaus ist die Montage und die Wartung der Lichtwellenleiter aufwändig. Insbesondere bei den so genannten modularen Mehrstufenumrichtern müssen Signale über kurze Strecken in der Größenordnung von wenigen Zentimetern übertragen werden. Der Einsatz von Lichtwellenleitern führt hier zu hohen Kosten und unnötig großen Abständen zwischen den Komponenten.

Aus der Offenlegungsschrift US 2008/0187013 A1 ist ein Opto-Isolator bekannt, der einen optischen Sender und einen optischen Empfänger aufweist. Der Sender und der Empfänger sind in einem Informationsübertragungsschacht angeordnet und optisch miteinander gekoppelt.

Die deutsche Offenlegungsschrift DE 3617057 A1 offenbart ein optoelektronisches Koppelelement, mit dem eine Signalübertragung mit galvanischer Trennung zwischen zwei elektrischen Stromkreisen möglich ist. Bei diesem optoelektronischen Koppelelement sind eine Leuchtdiode und ein Fototransistor in einem Rohr angeordnet.

Aus der Schrift US 2002/0079945 A1 ist eine elektronische Schaltung zur potentialgetrennten Übertragung von Signalen bekannt, die zwei Optokoppler und einen Transformator aufweist. DE3617057, US2002/079945 und DE102006062599offenbaren Übertragungsvorrichtungen nach dem Stand der Technik.

Aufgabe der Erfindung ist es, eine Vorrichtung der eingangs genannten Art zu schaffen, mit der optische Signale kostengünstig und platzsparend übertragen werden können.

Die Erfindung löst diese Aufgabe dadurch, dass sich zwischen dem ersten Bauteil und dem zweiten Bauteil ein Übertragungsgehäuse erstreckt, das einen Informationsübertragungsschacht ausbildet, in dem der Sender und der Empfänger einander gegenüber angeordnet und so miteinander gekoppelt sind.

Die Erfindung basiert auf der Idee, dass die Signale zwischen optischen Sendern und optischen Empfängern keineswegs über Lichtwellenleiter übertragen werden müssen. Im Rahmen der Erfindung ist es vielmehr ausreichend, dass zwischen zwei Bauteilen ein Übertragungsgehäuse angeordnet ist, das einen Informationsübertragungsschacht ausbildet, in dem ein Sender und ein Empfänger angeordnet sind. Der Informationsübertragungsschacht schirmt den Sender und den Empfänger von äußeren Störfaktoren, insbesondere Störlicht, ab, so dass auf einfache optische Sender oder Empfänger, beispielsweise in Gestalt von Dioden, zurückgegriffen werden kann. Der Informationsübertragungsschacht erstreckt sich geradlinig und ist frei von lichtundurchlässigen Hindernissen, so dass sich das Licht, also eine elektromagnetische Welle von infraroten bis zum ultravioletten Spektralbereich, in dem Informationsübertragungsschacht störungsfrei ausbreiten kann.

Vorteilhafterweise sind in dem Übertragungsgehäuse mehrere Informationsübertragungsschächte ausgebildet. Somit können im Rahmen der Erfindung mehrere Signale parallel übertragen werden. Die Signale sind beispielsweise Steuersignale, Messsignale oder dergleichen.

Gemäß einer bevorzugten Ausgestaltung der Erfindung besteht das Übertragungsgehäuse aus einem elektrisch nicht leitenden Isolierstoff. Gemäß dieser vorteilhaften Weiterentwicklung der Erfindung ist es möglich, dass die Bauteile, zwischen denen das Übertragungsgehäuse angeordnet ist, auf einem unterschiedlichen elektrischen Potenzialen liegen, wobei das Übertragungsgehäuse in Kontakt mit beiden Bauteilen steht. Aufgrund der elektrisch nicht leitenden Eigenschaften des Übertragungsgehäuses fließen keine Ströme zwischen den Komponenten.

Zweckmäßigerweise sind in dem Übertragungsgehäuse Mittel zur Energieübertragung zwischen dem ersten und dem zweiten Bauteil angeordnet. Solche Mittel zur Energieübertragung umfassen beispielsweise einen Transformator, der induktiv miteinander gekoppelte Wicklungen aufweist, die beispielsweise in einem Isolierstoff vergossen und von dem Übertragungsgehäuse ummantelt sind. Die Primärwicklung dieses vergossenen Transformators ist beispielsweise mit dem ersten Bauteil und die Sekundärwicklung mit dem besagten zweiten Bauteil elektrisch verbunden. Somit ist mit Hilfe der erfindungsgemäßen Vorrichtung nicht nur eine kostengünstige Signalübertragungsstrecke, sondern gleichzeitig ein Energieüberträger zwischen dem ersten und dem zweiten Bauteil bereitgestellt.

Zweckmäßigerweise ist das Übertragungsgehäuse lichtdicht zwischen dem ersten Bauteil und dem zweiten Bauteil angeordnet, so dass der Einfall von Umgebungslicht in den Informationsübertragungsschacht verhindert ist. Gemäß dieser vorteilhaften Weiterentwicklung ist der Einfall von Außenlicht in den Informationsübertragungsschacht nahezu vollständig verhindert. Die Bauteile verdecken jeweils eine der beiden Durchgangsöffnungen des Übertragungsgehäuses.

Der Informationsübertragungsschacht ist zweckmäßigerweise zylindrisch, beispielsweise kreiszylindrisch, oder kanalförmig also beispielsweise rechteckig ausgestaltet. Zweckmäßigerweise ist das Übertragungsgehäuse so ausgestaltet, dass Licht zur Signalübertragung von einem Ende des Informationsübertragungsschachtes zum anderen Ende des Informationsübertragungsschachtes gelangt, ohne dass zusätzliche optische Komponenten, wie beispielsweise Glasfasern, Linsen, Spiegel oder dergleichen, im Informationsübertragungsschacht zwingend eingesetzt werden müssen. Mit anderen Worten weist der Informationsübertragungsschacht in der Lichtausbreitungsrichtung einen lichten Durchmesser auf, so dass Licht, das von dem optischen Sender emittiert wird, störungsfrei zum optischen Empfänger gelangen kann. Je lichtdichter der Informationsübertragungsschacht, desto besser ist die Übertragungsqualität. An dieser Stelle sei jedoch darauf hingewiesen, dass im Rahmen der Erfindung auch optische Bauteile wie Linsen und/oder andere Lichtleitkomponenten im Informationsübertragungsschacht eingesetzt werden können. Selbstverständlich können erfindungsgemäß auch transparente Komponenten angeordnet sein, welche die Informationsübertragung nicht beeinflussen.

Die Erfindung betrifft ferner einen Umrichter zum Übertragen einer elektrischen Leistung zwischen einem Wechselspannungsnetz und einem Gleichspannungsnetz, wobei der Umrichter mit wenigstens einer Vorrichtung der oben genannten Art ausgerüstet ist.

Bevorzugt weist der Umrichter eine Reihenschaltung von zweipoligen Submodulen auf, wobei jedes Submodul über einen Energiespeicher sowie eine Leistungshalbleiterschaltung verfügt, die so miteinander verschaltet sind, dass entweder die an dem Energiespeicher abfallende Spannung oder aber eine Nullspannung an den beiden Anschlussklemmen eines jeden Submoduls erzeugbar ist. Ein solcher Umrichter wird auch als modularer Mehrstufenumrichter oder auf Englisch "Modular Multilevel Converter" bezeichnet.

Das Übertragungsgehäuse kann selbstverständlich neben den hier genannten Merkmalen auch noch Informationsübertragungsschächte aufweisen, in denen weitere Komponenten, wie beispielsweise Widerstände oder dergleichen, angeordnet sind. Die Widerstände sind z.B. ohmsche Widerstände oder nichtlineare Widerstände.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel der erfindungsgemäßen Vorrichtung in einer Seitenansicht,
- Figur 2: die Vorrichtung gemäß Figur 1 in einer teilweise geschnittenen Seitenansicht und
- Figur 3: ein weiteres Ausführungsbeispiel der erfindungsgemäßen Vorrichtung in einer teilweise geschnittenen Seitenansicht zeigen.

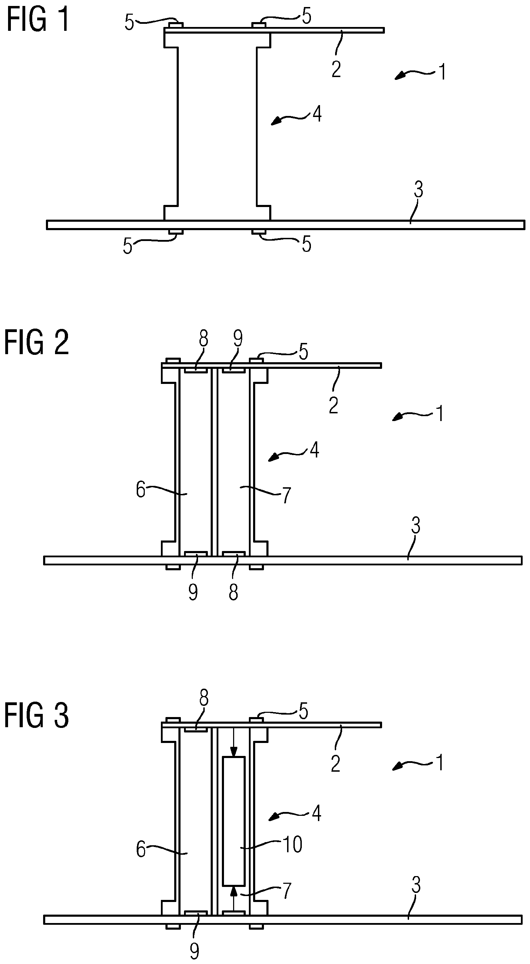

Figur 1 zeigt ein Ausführungsbeispiel der erfindungsgemäßen Vorrichtung 1, wobei die Vorrichtung eine erste Leiterplatte 2 als erstes Bauteil sowie eine zweite Leiterplatte 3 als zweites Bauteil aufweist. Die Leiterplatten 2 und 3 sind Teil eines Submoduls eines so genannten modularen Mehrstufenumrichters. Der modulare Mehrstufenumrichter weist Umrichterzweige oder -arme auf, die zu einer so genannten Sechs-Puls-Brücke miteinander verschaltet sind. Die zweipoligen Submodule verfügen jeweils über einen Energiespeicher, beispielsweise in Gestalt eines Kondensators sowie über eine dem Energiespeicher parallel geschaltete Leistungshalbleiterschaltung. Dabei bilden die zweipoligen Submodule entweder eine Halbbrückenschaltung oder aber eine Vollbrückenschaltung aus und sind miteinander zu einer Reihenschaltung verbunden. Die Topologie solcher modularen Mehrstufenumrichter ist jedoch als solche bekannt, so dass an dieser Stelle hierauf nicht detailliert eingegangen zu werden braucht.

In jedem der Submodule sind Leiterplatten 2 und 3 angeordnet, die auf einem unterschiedlichen elektrischen Potenzial liegen. Zwischen den Leiterplatten 2 und 3 erstreckt sich ein Übertragungsgehäuse 4, das aus einem elektrisch nicht leitenden Material, wie beispielsweise einem Polymer, besteht. Das Übertragungsgehäuse 4 ist an seinen Enden über Befestigungsmittel 5 fest mit den Leiterplatten 2 beziehungsweise 3 verbunden.

Figur 2 zeigt die Vorrichtung gemäß Figur 1 in einer teilweise geschnittenen Seitenansicht. Hier ist erkennbar, dass in dem Übertragungsgehäuse 4 zwei parallel zueinander verlaufende Informationsübertragungsschächte 6 und 7 ausgebildet sind. Die Informationsübertragungsschächte 6 und 7 sind kanalförmig ausgestaltet und bilden somit einen sich geradlinig erstreckenden Hohlraum aus. Im Übertragungsschacht 6 ist an seinem einen Ende ein optischer Sender 8 an der Leiterplatte 2 angeordnet. Diesem im Informationsübertragungsschacht 6 geradlinig gegenüberliegend ist an der zweiten Leiterplatte 3 ein optischer Empfänger 9 angebunden. Der optische Sender 8 ist beispielsweise eine optische Diode. Der optische Empfänger 9 ist ein lichtempfindliches Bauteil, das beispielsweise ebenfalls als Halbleiter realisiert ist. Dabei werden der optische Sender und der optische Empfänger nahezu lichtdicht von der Begrenzungswandung des Informationsübertragungsschachtes 6 umschlossen, so dass der Einfall von Umgebungslicht in den Informationsübertragungsschacht 6 oder 7 verhindert ist. Zweckmäßigerweise sind figürlich nicht dargestellte Dichtungsmittel zwischen Bauteil 2, 3 und dem Übertragungsgehäuse vorgesehen.

Durch geeignete Ansteuerung der Diode 8 erzeugt diese kodierte Lichtimpulse, also ein digitales optisches Signal. Die Lichtimpulse durchlaufen den Informationsübertragungsschacht 6 und gelangen zur Empfängerdiode, die das optische Signal ausgangsseitig in ein elektrisches Signal umwandelt. Auf diese Weise kann Information zwischen der ersten Leiterplatte 2 und der zweiten Leiterplatte 3 übertragen werden. In dem Informationsübertragungsschacht 7 ist ebenfalls ein optisches Sender- und Empfängerpaar angeordnet, wobei jedoch der optische Sender an der zweiten Leiterplatte 3 und der optische Empfänger an der ersten Leiterplatte 2 befestigt sind.

In dem Übertragungsgehäuse 4 ist ein figürlich nicht dargestellter Transformator angeordnet. Der Transformator dient zur Übertragung von elektrischer Leistung, die zum Betrieb der an der ersten und/oder der zweiten Leiterplatte befestigten Leistungselektronik benötigt wird.

Figur 3 zeigt ein weiteres Ausführungsbeispiel der erfindungsgemäßen Vorrichtung, die jedoch in einem der Informationsübertragungsschächte 7 ein elektrisches Bauteil 10 in Gestalt eines ohmschen Widerstandes aufweist. Mit Hilfe des Widerstandes 10 können neben den optischen Signalen auch elektrische Signale durch den Informationsübertragungsschacht 7 übertragen werden.

## Patentansprüche

1. Vorrichtung (1) zur Übertragung von Signalen mit
- einem ersten Bauteil (2), an dem ein optischer Sender (8) angeordnet ist, und
- einem zweiten Bauteil (3), an dem ein optischer Empfänger (9) angeordnet ist,
wobei sich zwischen dem ersten Bauteil (2) und dem zweiten Bauteil (3) ein Übertragungsgehäuse (4) erstreckt, das einen Informationsübertragungsschacht (6,7) ausbildet, in dem der Sender (8) und der Empfänger (9) angeordnet und so miteinander gekoppelt sind, und wobei in dem Übertragungsgehäuse (4) Mittel zur Energieübertragung zwischen dem ersten und dem zweiten Bauteil (2,3) angeordnet sind,
**dadurch gekennzeichnet, dass**
die Mittel zur Energieübertragung als in dem Übertragungsgehäuse (4) vergossener Transformator ausgestaltet sind.

2. Vorrichtung (1) nach Anspruch 1,
**dadurch gekennzeichnet, dass**
in dem Übertragungsgehäuse (4) mehrere Informationsübertragungsschächte (6,7) ausgebildet sind.

3. Vorrichtung (1) nach einem der vorhergehenden Ansprüche,
**dadurch gekennzeichnet, dass**
das Übertragungsgehäuse (4) aus einem elektrisch nicht leitenden Isolierstoff besteht.

4. Vorrichtung (1) nach einem der vorhergehenden Ansprüche,
**dadurch gekennzeichnet, dass**
das Übertragungsgehäuse (4) lichtdicht zwischen dem ersten Bauteil (2) und dem zweiten Bauteil (3) verbaut ist, so dass der Einfall von Umgebungslicht in jeden Informationsübertragungsschacht (6,7) verhindert ist.

5. Umrichter zum Übertragen einer elektrischen Leistung zwischen einem Wechselspannungsnetz und einem Gleichspannungsnetz, wobei der Umrichter mit einer Vorrichtung (1) nach einem der vorhergehenden Ansprüche ausgerüstet ist.

6. Umrichter nach Anspruch 5,
**dadurch gekennzeichnet, dass**
der Umrichter eine Reihenschaltung von zweipoligen Submodulen aufweist, wobei jedes Submodul über einen Energiespeicher sowie eine Leistungshalbleiterschaltung verfügt, die so miteinander verschaltet sind, dass entweder die an dem Energiespeicher abfallende Spannung oder aber eine Nullspannung an den beiden Anschlussklemmen eines jeden Submoduls erzeugbar ist.

## Claims

1. Apparatus (1) for transmitting signals comprising
- a first component (2) on which an optical transmitter (8) is arranged, and
- a second component (3) on which an optical receiver (9) is arranged,
wherein a transmission housing (4) extends between the first component (2) and the second component (3), which transmission housing forms an information transmission chamber (6, 7) in which the transmitter (8) and the receiver (9) are arranged and thus coupled to one another, and wherein means for transmitting energy between the first and the second component (2, 3) are arranged in the transmission housing (4),
**characterized in that**
the means for transmitting energy are designed as a transformer cast in the transmission housing (4).

2. Apparatus (1) according to Claim 1, **characterized in that** a plurality of information transmission chambers (6, 7) are formed in the transmission housing (4).

3. Apparatus (1) according to either of the preceding claims, **characterized in that** the transmission housing (4) consists of an electrically non-conductive insulating material.

4. Apparatus (1) according to one of the preceding claims, **characterized in that** the transmission housing (4) is installed in light-impermeable fashion between the first component (2) and the second component (3) so that the incidence of ambient light into each information transmission chamber (6, 7) is prevented.

5. Converter for transmitting an electrical power between an AC grid and a DC grid, wherein the converter is fitted with an apparatus (1) according to one of the preceding claims.

6. Converter according to Claim 5, **characterized in that** the converter has a series circuit composed of two-pole submodules, wherein each submodule has an energy store and a power semiconductor circuit, which are interconnected with one another in such a way that either the voltage dropped across the energy store or else a zero voltage can be generated at the two connection terminals of each submodule.

## Revendications

1. Dispositif (1) de transmission de signaux, comprenant
- un premier élément (2), sur lequel est monté un émetteur (8) optique et
- un deuxième élément (3), sur lequel est monté un récepteur (9) optique,
dans lequel, entre le premier élément (2) et le deuxième élément (3) s'étend un boîtier (4) de transmission, qui constitue un puits (6, 7) de transmission d'information, dans lequel l'émetteur (8) et le récepteur (9) sont montés et sont ainsi couplés l'un à l'autre et dans lequel, dans le boîtier (4) de transmission, sont disposés des moyens de transfert d'énergie entre le premier et le deuxième élément (2, 3),
**caractérisé en ce que**
les moyens de transfert d'énergie sont conformés sous la forme d'un transformateur coulé dans le boîtier (4) de transmission.

2. Dispositif (1) suivant la revendication 1,
**caractérisé en ce que**
plusieurs puits (6, 7) de transmission d'information sont constitués dans le boîtier (4) de transmission.

3. Dispositif (1) suivant l'une des revendications précédentes,
**caractérisé en ce que**
le boîtier (4) de transmission est en un matériau isolant non conducteur de l'électricité.

4. Dispositif (1) suivant l'une des revendications précédentes,
**caractérisé en ce que**
le boîtier (4) de transmission est étanche à la lumière entre le premier élément (2) et le deuxième élément (3), de manière à empêcher l'entrée de lumière ambiante dans chaque puits (6, 7) de transmission d'information.

5. Onduleur pour transformer une puissance électrique entre un réseau de tension alternative et un réseau de tension continue, le convertisseur étant équipé d'un dispositif (1) suivant l'une des revendications précédentes.

6. Onduleur suivant la revendication 5,
**caractérisé en ce que**
l'onduleur a un montage en série de sous-modules bipolaires, chaque sous-module disposant d'un accumulateur d'énergie ainsi que d'un montage à semi-conducteur de puissance, qui sont câblés entre eux, de manière à pouvoir produire, aux deux bornes de connexion de chaque sous-module, soit la tension aux bornes de l'accumulateur d'énergie, soit une tension nulle.
